# EUROPEAN PATENT SPECIFICATION

(11) **EP 3 957 146 B1**
(45) Date of publication and mention of the grant of the patent: **09.09.2026**
(21) Application number: 21191248.0
(22) Date of filing: 13.08.2021
(51) Int. Cl.: A01C 7/20, A01C 7/04

(54) **FRAME ADJUSTMENT CONTROL SYSTEM AND METHOD FOR POSITION**
SYSTEM UND VERFAHREN ZUR RAHMENANPASSUNGSSTEUERUNG FÜR POSITION
SYSTÈME DE COMMANDE DE RÉGLAGE DE CADRE ET PROCÉDÉ DE POSITION

(30) Priority: 18.08.2020 US 202063066922 P; 28.07.2021 US 202117387132
(43) Date of publication of application: 23.02.2022
(73) Proprietor: Deere & Company, Moline, IL 61265 (US)
(72) Inventor: MARO, Randall, Moline, 61265 (US)
(74) Representative: Reddie & Grose LLP

(56) References cited:
- WO-A1-2021/089197
- US-A1- 2020 084 951

## Description

### Field of the Disclosure

The present disclosure relates to an agricultural machine, such as a planter with a toolbar or rockshaft frame, and more particularly to control systems and methods for adjusting the toolbar or rockshaft frame.

### Background of the Disclosure

Work machines, such as those in the agricultural, construction and forestry industries perform a variety of operations. In some instances, the machines are provided with a toolbar frame or a rockshaft frame that may be rotated relative to a main frame of the machine. In some instances, the work machine may be an agricultural planter or row crop planter having row units configured to distribute a commodity to the soil. The row units may be configured to follow the rockshaft frame or the toolbar frame along the ground.

Tires and track sizes of row crop planters continue to grow such that they can no longer be mounted in their prior locations on the machine. There is a tendency to move the tires or tracks forward relative to the main frame of the machine. This means that the pivot point about which the rockshaft or toolbar frame rotates must move as well. Additionally, as the terrain changes and becomes more challenging, the row units need to travel further in the vertical direction relative to the toolbar or rockshaft frame in order to stay engaged with the soil. These obstacles and other considerations create a need for more effective systems and methods for controlling adjustment of the toolbar or rockshaft frame on agricultural machines.

US 2020084951 discloses an implement contouring toolbar with a frame member, a toolbar connected to the frame member and a row unit coupled to the toolbar. An actuator is coupled between the frame member and the toolbar to rotate the toolbar based on the sensed position of the toolbar.

WO 2021/089197 was published after the effective filing date of the present application. This discloses an agricultural machine for soil tillage and/or sowing, having a frame, a carrier mounted on the frame with a height and/or angle adjustment mechanism, and a tool unit attached to the carrier. The contact pressure of the tool against the soil and/or the depth of the tool into the soil can be adjusted using an adjustment mechanism.

### Summary

The scope of the present invention is defined by the scope of the appended claims. Any embodiments that do not fall under the scope of the claims are examples which are useful for understanding the invention, but do not form a part of the invention.

### Brief Description of the Drawings

The above-mentioned aspects of the present disclosure and the manner of obtaining them will become more apparent and the disclosure itself will be better understood by reference to the following description of the embodiments of the disclosure, taken in conjunction with the accompanying drawings, wherein:
FIG. 1 is a perspective view of an agricultural machine showing a main frame, a rotate frame, and row units of the agricultural machine;
FIG. 2 is a perspective view of a portion of the agricultural machine of FIG. 1 showing, in phantom, actuators coupled between the main frame and the rotate frame;
FIG. 3 is a cross-section view of a portion of the agricultural machine of FIG. 1 showing a position-based relationship between the rotate frame and a row unit;
FIG. 4 is a flow diagram of a control method for the agricultural machine using position adjustment of the rotate frame based on position feedback from the row units;
FIG. 5 is a flow diagram of a control method for the agricultural machine using downforce adjustment of the rotate frame based on position feedback from the row units;
FIG. 6 is a flow diagram of a control method for the agricultural machine using downforce adjustment of the rotate frame based on downforce feedback from the row units;
FIG. 7 is a flow diagram of an Individual Row Hydraulic Downforce control method for the agricultural machine;
FIG. 8 is a flow diagram of a control method for the agricultural machine using position adjustment of the rotate frame based on downforce feedback from the row units;
FIG. 9 is a flow diagram of a control method for the agricultural machine using position adjustment of the rotate frame based on a downforce limit of the row units;
FIG. 10 is a perspective view of a wing frame of the agricultural machine of FIG. 1;
FIG. 11 is a perspective view another agricultural machine showing a main frame, a rotate frame, and row units of the agricultural machine; and

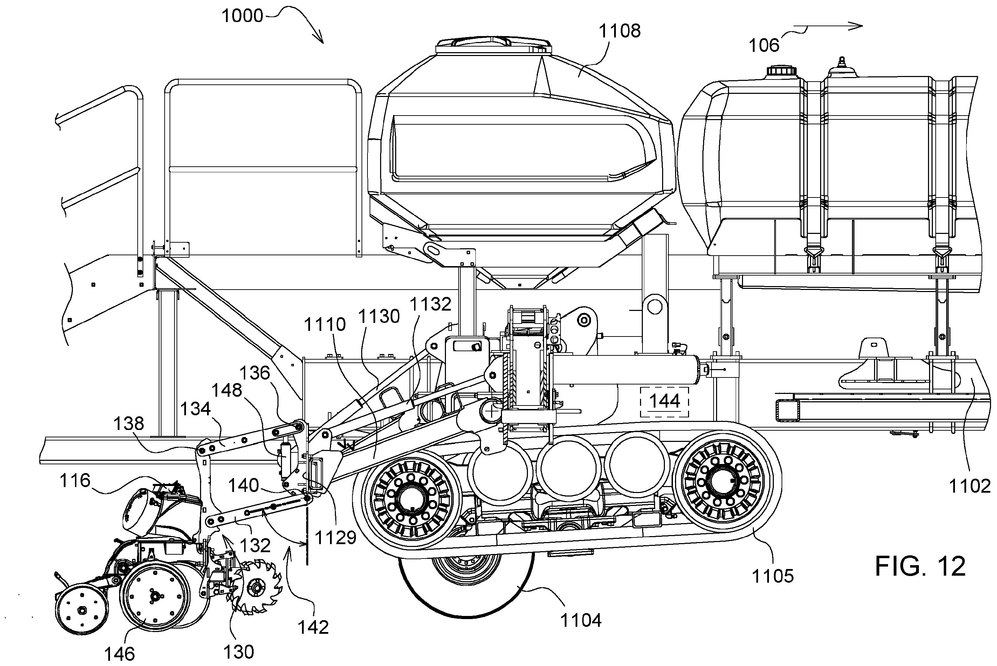

FIG. 12 is a cross-section view of a portion of the agricultural machine of FIG. 11 showing a position-based relationship between the rotate frame and a row unit.

### Detailed Description

The embodiments of the present disclosure described below are not intended to be exhaustive. Rather, the embodiments are chosen and described so that others skilled in the art may appreciate and understand the principles and practices of the present disclosure.

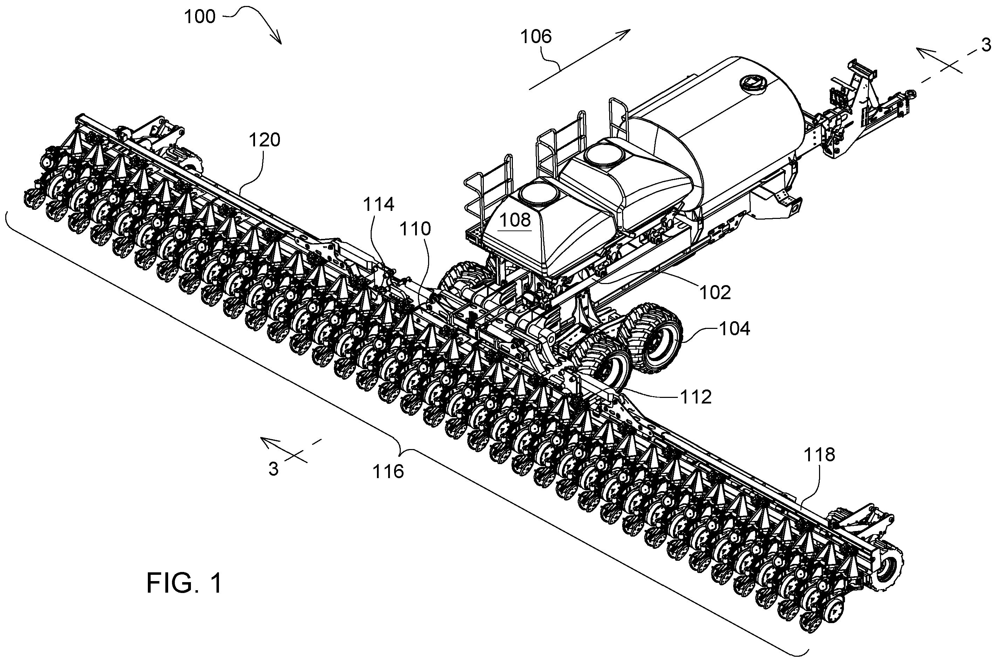

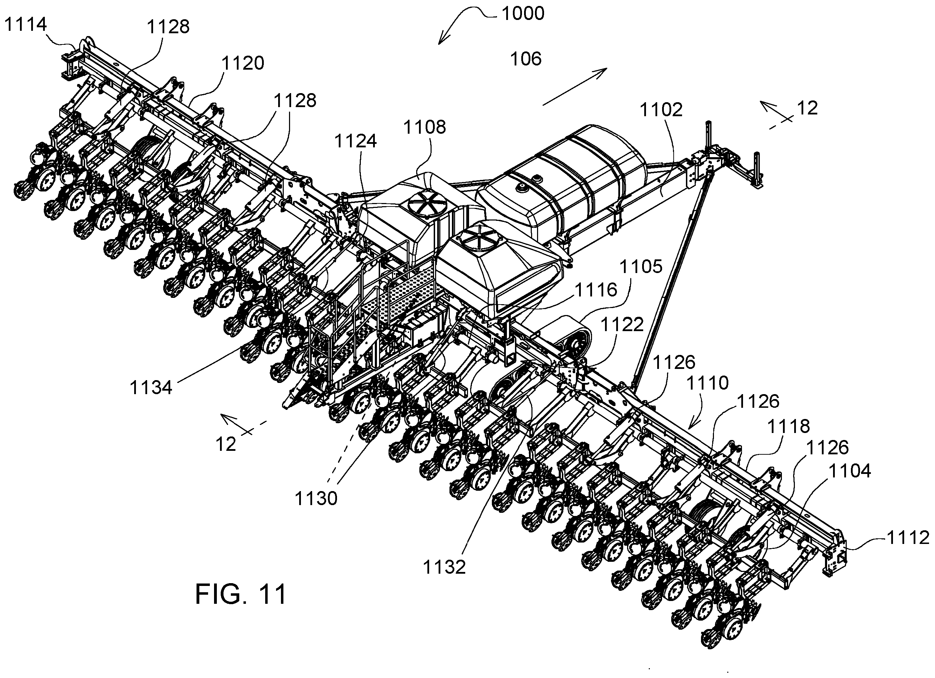

Referring to FIG. 1, an exemplary embodiment of an agricultural machine, such as a row crop planter 100 is shown. The machine 100 includes a main frame 102 supported above the ground by wheels 104. It should be appreciated that in some cases (e.g., Fig. 11) a main frame may also be supported by tracks or another mechanism capable of moving the machine forwardly in the axial direction as indicated by the arrow 106. The main frame 102 may support one or more commodity containers such as the container 108. The main frame 102 is coupled to a rotate frame 110 that extends laterally from a first lateral end 112 to a second lateral end 114. It should be appreciated that the rotate frame 110 illustratively shown in Fig. 1 may be referred to as a toolbar; however, the aspects of the disclosure may be applicable to other rotate frame configurations as well (e.g., a rockshaft-type rotate frame as shown in Fig. 11).

A plurality of row units 116 are coupled to a rearward end of rotate frame 110 to deliver commodity received from the commodity container 108 to the soil. As described in greater detailed below, the rotate frame 110 may be adjusted relative to the main frame 102 to maintain each row unit 116 at an optimal position and/or downforce. The machine 100 also includes a first wing frame 118 coupled to the first lateral end 112 of the rotate frame 110 and a second wing frame 120 coupled to the second lateral end 114 of the rotate frame 110. It should be appreciated that the wing frame 118 is a mirror image of, but otherwise identical to, the wing frame 120 such that any description of the wing frame 118 and its related components applies equally to the wing frame 120.

The rotate frame 110 and the wing frames 118, 120 may be adjusted to maintain each row unit 116 at an optimal position and/or downforce. The row units 116 are designed to have a desired amount of travel in an acceptable working range. If the rear end of the rotate frame 110 rotates upward or downward an excessive amount relative to the mainframe 102, the row units 116 may become positioned outside the acceptable working range. This excessive rotation may occur in response to the agricultural machine 100 traversing ground having uneven surfaces.

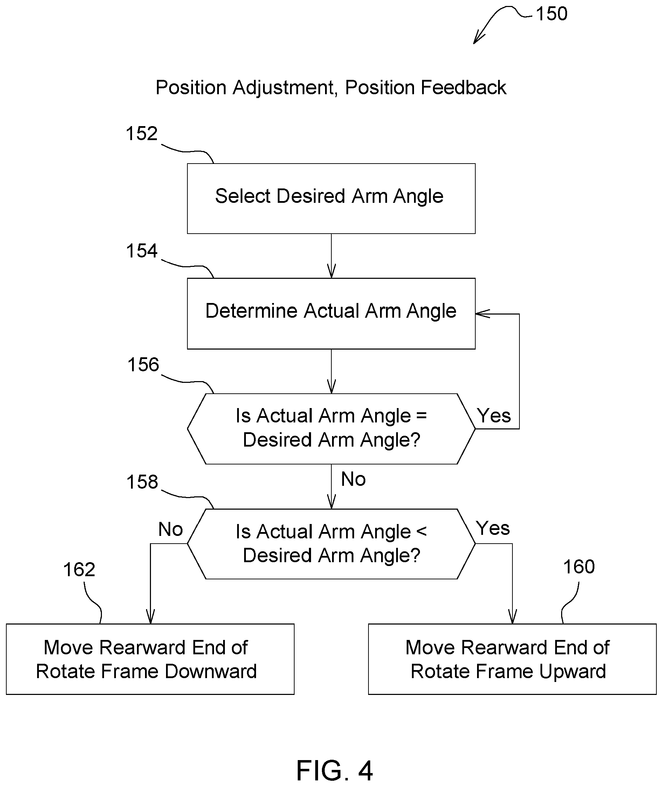

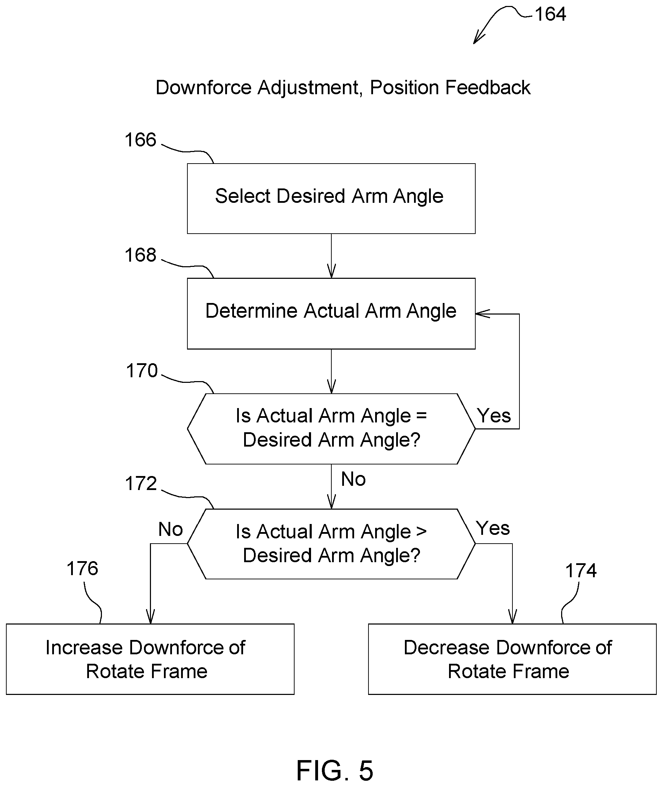

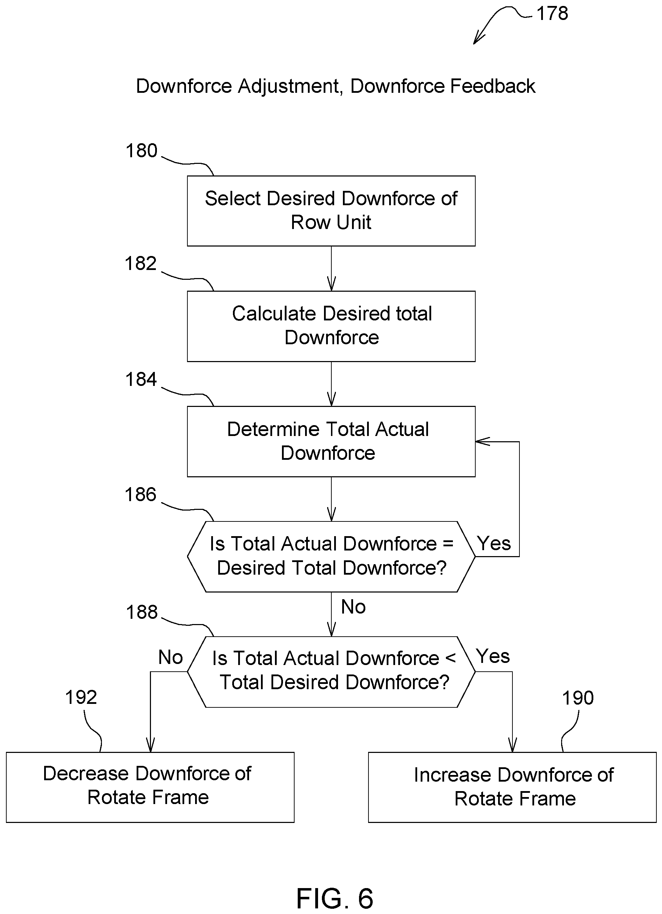

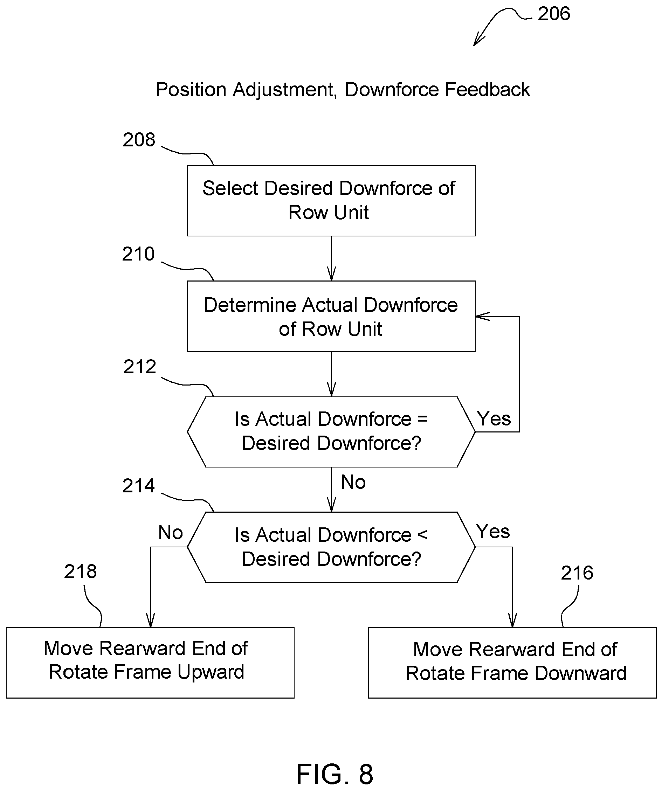

Several control methods used to adjust the rotate frame 110 are described in detail herein. Specifically, (i) the position of the rotate frame may be adjusted based on position feedback from the row units, as shown in Fig. 4; (ii) the downforce of the rotate frame may be adjusted based on position feedback from the row units, as shown in Fig. 5; (iii) the downforce of the rotate frame may be adjusted based on downforce feedback from the row units, as shown in Fig. 6; and (iv) the position of the rotate frame may be adjusted based on downforce feedback from the row units, as shown in Fig. 8.

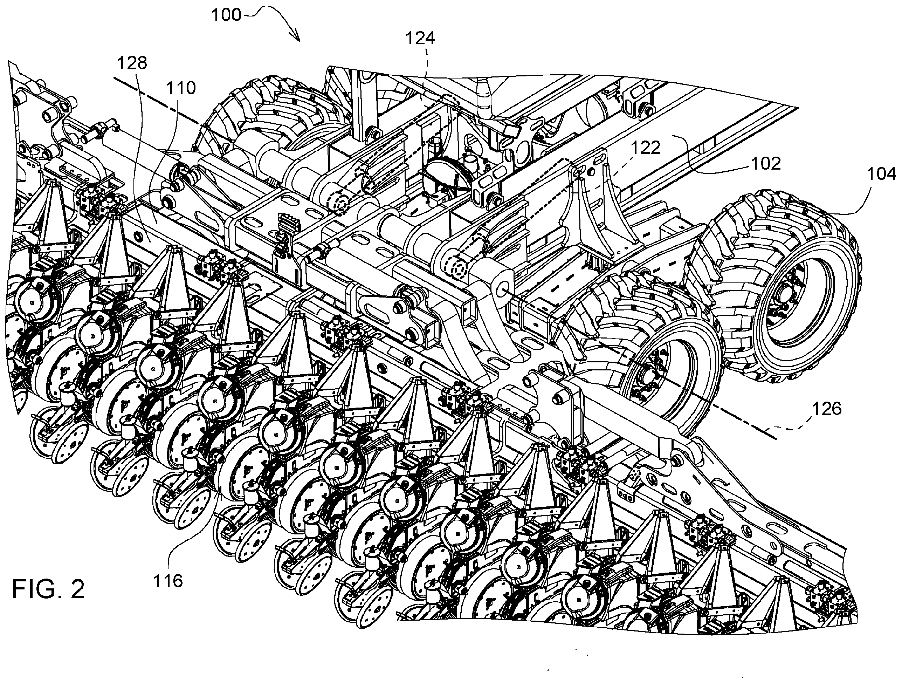

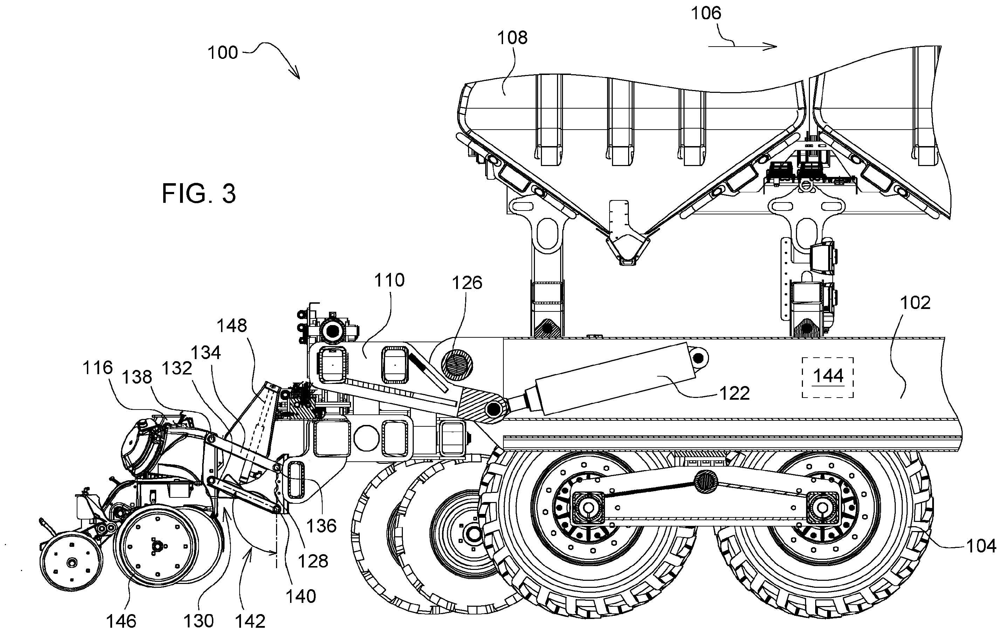

Referring now to Fig. 2, the work machine includes a first actuator 122 and a second actuator 124 each coupled between the main frame 102 and the rotate frame 110. The actuators 122, 124 are moveable between an extended position (or pressurized condition) and a retracted position (or depressurized condition) to adjust the downforce and/or the position of rotate frame 110. For example, when the actuators 122, 124 are extended (or pressurized), the rotate frame 110 pivots about the axis 126 to move a rearward portion 128 of the rotate frame 110 upward. When the actuators 122, 124 are contracted (or depressurized), the rotate frame 110 pivots about the axis 126 to move the rearward portion 128 of the rotate frame 110 downward (see Fig. 3). By adjusting the downforce and/or the position of the rotate frame 110, the position and the downforce of the row units 116 are also adjusted.

It should be appreciated that if the position of the rotate frame 110 is adjusted, the actuators must move from a first position to a second position. Therefore, position sensors and positioning software of the machine 100 may be used to determine and adjust the position of the actuators and/or the rotate frame 110. However, if the downforce of the rotate frame 110 is adjusted, the pressure within the actuators is increased or decreased without the use of positioning components. Therefore, because downforce adjustment is not reliant on position sensors and positioning software, the downforce adjustment control methods discussed below may operate at a faster rate than the position adjustment control methods discussed below.

As shown in Fig. 3, each row unit 116 is coupled to the rotate frame 110 via a linkage assembly 130. The linkage assembly 130 includes a pair of parallel arms including a first arm 132 and a second arm 134. It should be appreciated that the arms 132, 134 are identical such that any description of one arm applies equally to the other arm. The arm 134 includes a first end 136 coupled to the rearward portion 128 of the rotate frame 110 and a second end 138 coupled to the row unit 116.

Each row unit 116 further includes a row unit actuator 148 that is configured to extend and contract to adjust the position and/or the downforce exerted by the row unit 116 on the soil. Each row unit 116 further includes a downforce gauge 146 configured to determine the downforce applied by the row unit 116 to the soil. The row unit actuator 148 and the row unit downforce gauge 146 are components of an Individual Row Hydraulic Downforce (IRHD) system which will be described in greater detail below.

The machine 100 further includes a sensor 140 configured to determine the position of the arm(s) 132 and/or 134. In the illustrative embodiments, the position of the arm(s) may be determined relative to the rotate frame 110; alternatively, the position of the rotate frame 110 and/or the arms 132, 134 may be determined relative to the ground. Any frame of reference is suitable so long as the position of a row unit 116 is determinable relative to the position of the rotate frame. The position of the row unit 116 relative to the position of the rotate frame 110 (and/or the ground) may be referred to as "a position-based relationship" between the row unit 116 and the rotate frame 110. Alternatively, this may be referred to as an "actual row-unit position value."

The sensor 140 may be any sensor suitable for determining the position of the arms 132, 134 or suitable for determining the position-based relationship or the actual row-unit position value. Examples of such sensors may include an Ultrasonic sensor or the like suitable for measuring the distance to ground from the row unit 116 and/or from the rotate frame 110, a sensor configured to measure the position of the row unit actuator 148, a sensor configured to measure the position of a gauge wheel coupled to the row unit 116 or the rotate frame 110, or a potentiometer or proximity sensor suitable for measuring the relative position of any two of: the arms 134, 136, the rotate frame 110, and the row unit 116.

The work machine 100 further includes a controller 144. The controller 144 may be a single controller or multiple controllers cooperating to form a control system. The controller 144 may be positioned on the work machine, or the controller 144 may be positioned away from the work machine and configured to operate remotely by means known in the art. The sensor 140, the actuators 122, 124, downforce gauge 146, and the row unit actuator 148 are each operatively connected to the controller 144. The controller 144 is configured to send and/or receive signals to and from the sensor 140, the actuators 122, 124, the row unit downforce gauge 136, and the row unit actuator 148. The controller 144 is also configured to receive input signals from an operator control system (not shown), as will be described in greater detail below.

Referring still to Fig. 3, in the illustrative embodiment, a frame-to-arm angle 142 is defined between the rearward portion 128 (or rearward-facing portion 128) of the rotate frame 110 and the arm 132. The frame-to-arm angle 142 is a non-limiting example of a position-based relationship between the row unit 116 and a portion of the rotate frame 110. The frame-to-arm angle 142 may be adjusted by adjusting the rotate frame 110 relative to the main frame 102 using the actuators 122, 124 described above. Additionally, the ground level or soil condition beneath the main frame 102 may vary from the ground level or soil condition beneath the row units 116 during operation of the machine 100; therefore, control methods are needed to adjust the position and/or downforce of the rotate frame 110 and to, in turn, adjust the position and/or downforce of the row units 116.

Fig. 4 illustrates a control method 150 used to adjust the rotate frame 110, wherein the position of the rotate frame 110 is adjusted based on the position of the row units 116. According to the method 150, at step 152, a desired frame-to-arm angle is selected. A user may input a desired frame-to-arm angle into the operator control system, or the desired frame-to-arm angle may be predetermined (and pre-set) based on the type of machine and application in use. At step 154, the actual frame-arm-angle 142 is determined by the sensor 140 described above. In the illustrative embodiment, the sensor 140 sends a position signal to the controller 144. In the illustrative embodiment, the position signal is indicative of (or may be used to calculate) the actual frame-to-arm angle 142. At step 156, the controller 144 determines whether the actual frame-to-arm angle 142 is equal to the desired frame-to-arm angle. If the actual frame-to-arm angle 142 is equal to or within an acceptable range of the desired frame-to-arm angle, then the controller will repeat steps 154 and 156.

Referring again to step 156, if the actual frame-to-arm angle 142 is outside the acceptable range, the control method proceeds to step 158. At steps 158 and 160, if the actual frame-to-arm angle 142 is greater than the desired frame-to-arm angle, then the controller 144 sends a signal to the actuators 122, 124 instructing the actuators to extend from a first position to a second position. Extension of the actuators 122, 124 moves the rearward end 128 of the rotate frame 110 upward. This, in turn, decreases the actual frame-to-arm angle 142. After the actuators 122, 124 have extended to the second position, the frame-to-arm angle 142 is equal to or within an acceptable range of the desired frame-to-arm angle. Referring to steps 158 and 162, if the actual frame-to-arm angle 142 is less than the desired frame-to-arm angle, then the controller 144 sends a signal to the actuators 122, 124 instructing the actuators 122, 124 to contract from a first position to a second position. Contraction of the actuators 122, 124 moves the rearward end 128 of the rotate frame 110 downward. This, in turn, increases the actual frame-to-arm angle 142. After the actuators 122, 124 have contracted to the second position, the frame-to-arm angle 142 is equal to or within an acceptable range of the desired frame-to-arm angle.

Fig. 5 illustrates a control method 164 used to adjust the rotate frame 110, wherein the downforce of the rotate frame 110 is adjusted based on the position of the row units 116. According to the method 164, at step 166, a desired frame-to-arm angle is selected. The user may input the desired frame-to-arm angle into the operator control system, or the desired frame-to-arm angle may be predetermined (and pre-set) based on the type of machine and application being used. At step 168, the actual frame-arm-angle 142 is determined by the sensor 140 described above. In the illustrative embodiment, the sensor 140 sends a position signal to the controller 144. In the illustrative embodiment, the signal is indicative of (or may be used to calculate) the actual frame-to-arm angle 142. At step 170, the controller 144 determines whether the actual frame-to-arm angle 142 is equal to the desired frame-to-arm angle. If the actual frame-to-arm angle 142 is equal to or within an acceptable range of the desired frame-to-arm angle, then the controller will repeat steps 168 and 170.

Referring again to step 170, if the actual frame-to-arm angle 142 is outside the acceptable range the control method proceeds to step 172. At steps 172 and 174, if the actual frame-to-arm angle 142 is greater than the desired frame-to-arm angle, then the controller 144 will send a signal to the actuators 122, 124 instructing the actuators to decrease the downforce of the rotate frame 110. The downforce of the rotate frame 110 is the downforce that the rotate frame 110 applies to the arms 132, 134 of the row unit 116. In other words, the controller sends a signal to the actuators 122, 124 instructing the actuators to increase pressure therein, and thus extend, to decrease the downforce of the rotate frame 110. Increasing the pressure within the actuators 122, 124 moves the rearward end 128 of the rotate frame 110 upward. This, in turn, decreases the actual frame-to-arm angle 142. After the actuators 122, 124 have experienced this increase in pressure, the frame-to-arm angle 142 is equal to or within an acceptable range of the desired frame-to-arm angle.

Referring to steps 172 and 176, if the actual frame-to-arm angle 142 is less than the desired frame-to-arm angle, then the controller 144 will send a signal to the actuators 122, 124 instructing the actuators to increase the downforce of the rotate frame 110. In other words, the controller sends a signal to the actuators 122, 124 instructing the actuators to decrease pressure therein, and thus contract, to increase the downforce of the rotate frame 110. Decreasing the pressure within the actuators 122, 124 moves the rearward end 128 of the rotate frame 110 downward. This, in turn, increases the actual frame-to-arm angle 142. After the actuators 122, 124 have experienced this decrease in pressure, the frame-to-arm angle 142 is equal to or within an acceptable range of the desired frame-to-arm angle.

It should be appreciated that, in some embodiments, the control methods 150 and 164 may operate based on an average actual frame-to-arm angle. Therefore, the actual frame-to-arm angle 142 would be determined for each row unit 116, and an average actual frame-to-arm angle would be calculated therefrom. In this case, the average actual frame-to-arm angle would be substituted for the actual frame-to-arm angle 142 in the control methods 150 and 164.

In some instances, the position of row units 116 (and therefore the actual-frame-arm angle 142) can change very quickly over a small distance and/or over a short time. Thus, a filter may be applied to the position signal sent by the sensor 140. For example, a filter may be applied whereby the controller 144 calculates the average position of the arm(s) 132, 134 over a linear foot, for example, of ground profile. A filtered signal indicative of the average position is then received by the controller 144, at which point, the control method 150 or 164 resumes normal operation with step 156 or 170 as described above. The filter may be applied to the average position of the arm(s) of each row unit 116 or to the position of the arm(s) of a single row unit 116. It should be appreciated that the average position calculation and the filter described above may be applied to the frame-to-arm angle 142 or any other position-based relationship of the row units 116 relative to the rotate frame 110.

Thus, it should be appreciated that while the frame-to-arm angle 142 is shown and described in the exemplary embodiments, other angles or reference points between different components may be used to provide a position-based relationship between the row unit 116 relative and the rotate frame 110.

Fig. 6 illustrates a control method 178 used to adjust the rotate frame 110, wherein the downforce of the rotate frame 110 is adjusted based on the downforce of the row units 116. According to the method 178, at step 180, a desired downforce for each row unit 116 is selected. A user may input the desired downforce into the operator control system, or the desired downforce may be predetermined (and pre-set) based on the type of machine and application in use. Alternatively still, the machine 100 may include a "learn mode" to provide downforce outputs to the operator based on the position of the arms 132, 134, and the operator may select a desired downforce based on the downforce outputs provided at each arm position.

Referring still to Fig. 6, at step 182, the controller 144 calculates the total desired downforce of all the row units 116 based on the desired downforce of each individual row unit 116. In other words, the individual row unit desired downforce values are summed to calculate a desired total row unit downforce.

Each row unit 116 includes a downforce gauge 146 operatively connected to the controller 144, as described above. Each downforce gauge 146 sends an actual row unit downforce signal to the controller 144. The controller 144 sums the actual row unit downforce values to calculate a total actual row unit downforce. At step 186, the controller 144 determines whether the total actual row unit downforce is equal to or within an acceptable range of the desired total row unit downforce. If the total actual row unit downforce is equal to or within an acceptable range of the desired total row unit downforce, then the controller will repeat steps 184 and 186.

Referring again to step 186, if the total actual row unit downforce is outside the acceptable range the control method proceeds to step 188. At steps 188 and 190, if the actual total row unit downforce is less than the total desired row unit downforce, then the controller 144 will send a signal to the actuators 122, 124 instructing the actuators to increase the downforce of the rotate frame 110. In other words, the controller 144 sends a signal to the actuators 122, 124 instructing the actuators 122, 124 to decrease pressure therein, and thus contract, to increase the downforce of the rotate frame 110. Decreasing the pressure within the actuators 122, 124 moves the rearward end 128 of the rotate frame 160 downward. This, in turn, increases the total actual row unit downforce. After the actuators 122, 124 have experienced this decrease in pressure, the total actual row unit downforce 142 is equal to or within an acceptable range of the desired total row unit downforce.

Referring now to steps 188 and 192, if the actual total row unit downforce is greater than the total desired row unit downforce, then the controller 144 sends a signal to the actuators 122, 124 instructing the actuators to decrease the downforce of the rotate frame 110. In other words, the controller 144 sends a signal to the actuators 122, 124 instructing the actuators to increase pressure therein, and thus extend, to increase the downforce of the rotate frame 110. Increasing the pressure within the actuators 122, 124 moves the rearward end 128 of the rotate frame 110 downward. This, in turn, increases the total actual row unit downforce. After the actuators 122, 124 have experienced this increase in pressure, the total actual row unit downforce is equal to or within an acceptable range of the desired total row unit downforce.

The control method 178 may be used as a stand-alone control method for the machine 100. Additionally, the control method 178 may be used to supplement the control method 164 described in Fig. 5. In other words, in some embodiments, the downforce feedback from the row units 116 may be used to supplement the position feedback from the row units 116.

As described above, each row unit 116 includes a row unit actuator 148 and a row unit downforce gauge 146, which are components of the Individual Row Hydraulic Downforce (IRHD) system. In various known agricultural machines, similar IRHD systems may adjust the position or downforce of row units without regard to the newly contemplated control methods described herein. The IRHD system described herein may be used in conjunction with the newly contemplated control methods described herein. However, if the IRHD system is combined with one or more of the newly contemplated control methods described herein, the IRHD system may have a tendency to respond rhythmically with the newly contemplated control methods such that their respective effects (downforce or position adjustment of the row units) cancel each other out. Thus, the newly contemplated control systems are designed to operate at a slower rate than the IRHD system to overcome the offsetting-effect. The slower rate of operation described above is applicable to at least the control methods 150, 164, and 178. Such concepts will be discussed in greater detail below with the description of the IRHD system.

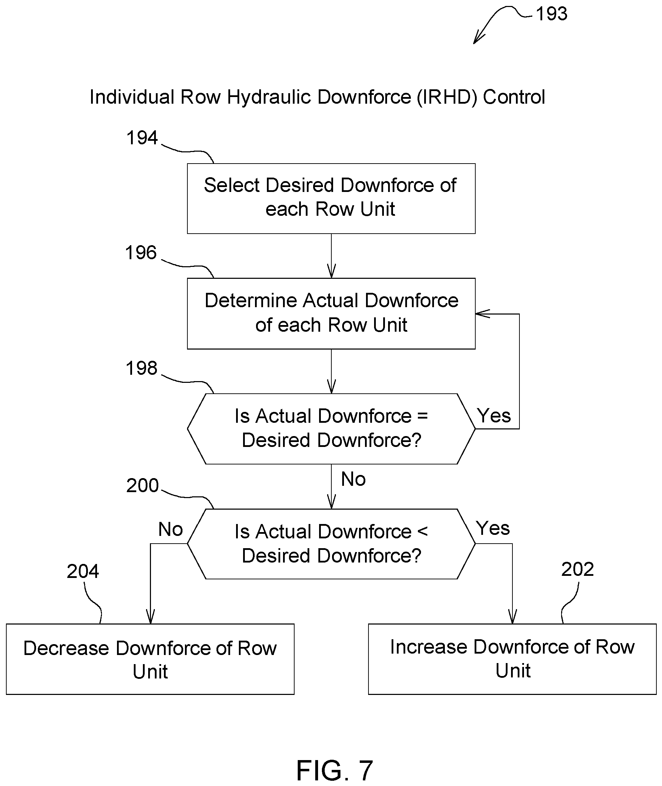

In the illustrative embodiment shown in Fig. 7, the IRHD system herein operates according to method 193. According to the method 193, at step 194, a desired downforce for each row unit 116 is selected. A user may input the desired downforce into the operator control system, or the desired downforce may be predetermined (and pre-set) based on the type of machine and application in use. Alternatively still, the machine 100 may include a "learn mode" to provide downforce outputs to the operator based on the position of the arms 132, 134, and the operator may select a desired downforce based on the downforce outputs provided at each arm position.

Referring still to Fig. 7, at step 196, the actual downforce of a row unit 116 is determined by the row unit downforce gauge 146. The downforce gauge 146 sends a signal indicating the actual row unit downforce to the controller 144. At step 198, the controller 144 determines whether the actual row unit downforce is equal to or within an acceptable range of the desired row unit downforce. If the actual row unit downforce is equal to or within an acceptable range of the desired row unit downforce, then the controller 144 will repeat steps 196 and 198.

Referring still to step 198, if the actual row unit downforce is not equal to or within an acceptable range of the desired row unit downforce, then the control method advances to step 200. Referring now to steps 200 and 202, if the actual row unit downforce is less than the desired row unit downforce, then the controller 144 will send a signal to the row unit actuator 148 instructing the row unit actuator 148 to extend. Extension of the row unit actuator 148 increases the downforce applied by the row unit 116 to the ground. Referring now to steps 200 and 204, if the actual row unit downforce is greater than the desired row unit downforce, then the controller 144 will send a signal to the row unit actuator 148 instructing the actuator to contract. Contraction of the row unit actuator 148 decreases the downforce applied by the row unit 116 to the soil.

In the embodiments described herein, steps 196-204 of the IRHD control method 193 are completed at a faster rate than are steps 154-162 of control method 150. Likewise, in the embodiments described herein, steps 196-204 of the IRHD control method 193 are completed at a faster rate than are steps 168-176 of control method 164. Likewise, in the embodiments described herein, steps 196-204 of the IRHD control method 193 are completed at a faster rate than are steps 182-192 of control method 178. As described above, the differences in rate of operation obviates the counteracting tendencies of the IRHD control method 193 and newly contemplated control methods 150, 164, 178.

At times, it may be beneficial to adjust the downforce of the rotate frame 110 rather than the position of the rotate frame 110, because downforce adjustment may allow for faster response time than position adjustment. Adjustment of pressure control valves of the actuators 122, 124 allows for immediate downforce adjustments without experiencing the delays associated with sensors and software that may be required for position adjustment.

In some instances, it may be beneficial to adjust the position of the rotate frame 110 based on downforce feedback from the row units 116. Fig. 8 illustrates a control method 206 used to adjust the rotate frame 110, wherein the position of the rotate frame 110 is adjusted based on the downforce of the row units 116. According to the method 206, at step 208, user may select a desired downforce of a row unit 116. The user may input the desired downforce into the operator control system, or the desired downforce may be predetermined (and pre-set) based on the type of machine and application in use. Alternatively still, the machine 100 may include a "learn mode" to provide downforce outputs to the operator based on various positions of the arms 132, 134, and the operator may select a desired downforce based on the downforce outputs provided at each arm position.

At step 210, the actual downforce of a row unit 116 is determined by the row unit downforce gauge 146. The downforce gauge 146 sends a signal indicating the actual row unit downforce to the controller 144. At step 212, the controller 144 determines whether the actual row unit downforce is equal to or within an acceptable range of the desired row unit downforce. If the actual row unit downforce is equal to or within an acceptable range of the desired row unit downforce, then the controller 144 will repeat steps 210 and 212.

Referring still to step 212, if the actual row unit downforce is not equal to or within an acceptable range of the desired row unit downforce, then the control method 206 advances to step 214. Referring now to steps 214 and 216, if the actual row unit downforce is less than the desired row unit downforce, then the controller 144 sends a signal to the actuators 122, 124 instructing the actuators to contract from a first position to a second position. Contraction of the actuators 122, 124 moves the rearward end 128 of the rotate frame 160 downward. This, in turn, increases the actual row unit downforce. After the actuators 122, 124 have contracted to the second position, the actual row unit downforce is equal to or within an acceptable range of the desired row unit downforce. Referring now to steps 214 and 218 if the actual row unit downforce is greater than the desired frame-to-arm angle, then the controller 144 sends a signal to the actuators 122, 124 instructing the actuators to extend from a first position to a second position. Extension of the actuators 122, 124 moves the rearward end 128 of the rotate frame 110 upward. This, in turn, decreases the actual row unit downforce. After the actuators 122, 124 have extended to the second position, the actual row unit downforce is equal to or within an acceptable range of the desired row unit downforce.

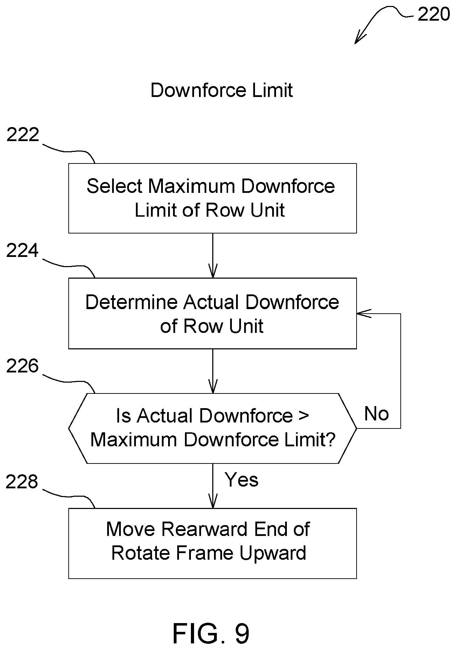

In some instances, it may be desirable to set a maximum or minimum downforce limit for the row units 116. Fig. 9 illustrates a method 220 used to control rotation of the rotate frame 110, wherein the position of the rotate frame 110 is adjusted based on the maximum downforce limit of the row unit 116. At step 222, a maximum downforce limit of a row unit 116 is selected. The operator may input the maximum downforce limit into the operator control system, or the maximum downforce limit may be predetermined (and pre-set) based on the type of machine and application in use. At step 224, the downforce gauge 146 determines the actual downforce applied by the row unit 116 to the soil. The downforce gauge 146 sends a signal to the controller 144 indicative of the actual downforce of the row unit 116. At step 226, the controller 144 determines whether the actual downforce of the row unit 116 is greater than the maximum downforce limit of the row unit 116. If the actual downforce of the row unit 116 is greater than the maximum downforce limit of the row unit 116, then the controller 144 sends a signal to the actuators 122, 124 instructing the actuators to extend from a first position to a second position. Extension of the actuators 122, 124 moves the rearward end 128 of the rotate frame 110 upward. This, in turn, decreases the actual row unit downforce. After the actuators 122, 124 have extended to the second position, the actual downforce of the row unit 116 is no longer greater than the maximum downforce limit of the row unit 116.

Although not shown with a flow diagram, it should be appreciated that a minimum downforce limit may also be selected. In this case, a method may be used to control rotation of the rotate frame 110, wherein the position of the rotate frame 110 is adjusted based on the minimum downforce limit of the row unit 116. In this case, a minimum downforce limit of a row unit 116 is selected. The operator may input the minimum downforce limit into the operator control system, or the minimum downforce limit may be predetermined (and pre-set) based on the type of machine and application in use. The downforce gauge 146 determines the actual downforce applied by the row unit 116 to the soil. The downforce gauge 146 sends a signal to the controller 144 indicative of the actual downforce of the row unit 116. The controller 144 determines whether the actual downforce of the row unit 116 is less than the minimum downforce limit of the row unit 116. If the actual downforce of the row unit 116 is less than the minimum downforce limit of the row unit 116, then the controller 144 sends a signal to the actuators 122, 124 instructing the actuators to contract from a first position to a second position. Contraction of the actuators 122, 124 moves the rearward end 128 of the rotate frame 110 downward. This, in turn, increases the actual row unit downforce. After the actuators 122, 124 have contracted to the second position, the actual downforce of row unit 116 is no longer less than the minimum downforce limit of row unit 116.

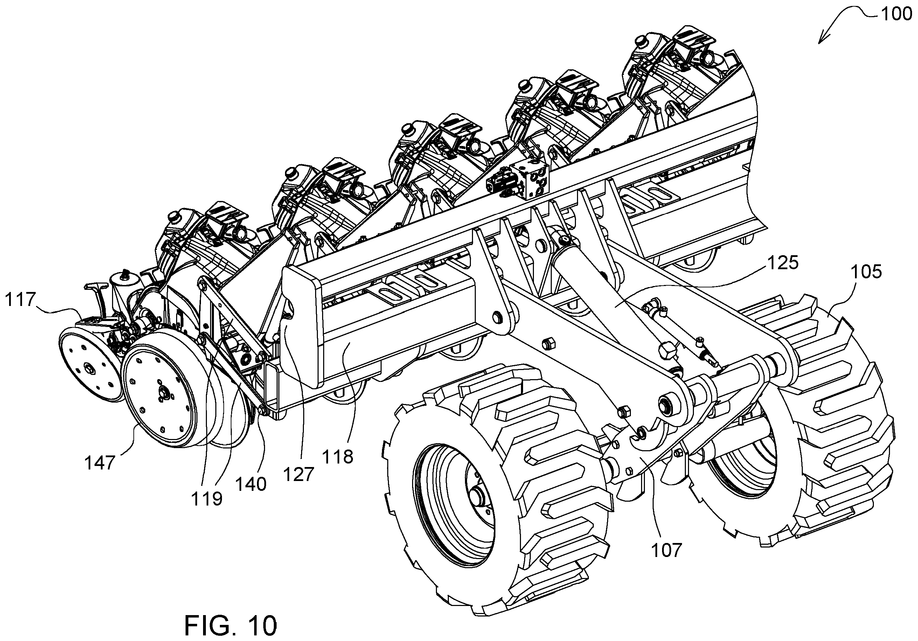

Referring now to Fig. 10, as described above, the wing frames 118, 120 are each coupled to lateral ends of the rotate frame 100. The wing frame 118 is coupled to wing row units 117 via wing arms 119. Each wing row unit 117 includes a wing downforce gauge 147 operatively connected to the controller 144. It should be appreciated that, unless stated otherwise, the wing row units 117, the wing arms 119, and the wing downforce gauges 147, are substantially the same as the row units 116, the arms 132, 134, and the downforce gauges 146 -the difference being that the wing components are coupled to the wing frames 118, 120 rather than the rotate frame 110. The wing frames 118, 120 may be adjusted to maintain each wing row unit 117 at an optimal position and/or downforce. In some embodiments, the wing frame 118 may be adjusted in response to the rotate frame 110 being adjusted. The downforce or the position adjustment of the rotate frame 110 triggers an equivalent downforce or position adjustment of the wing frame 118. In that case, the adjustment of the wing frame 118 aligns the wing frame 118 with the rotate frame 110 in terms of position relative to the main frame 102. In some embodiments, the wing frame 118 is adjusted based feedback received from the wing downforce gauges 147 or based on a force sensor coupled to a base portion 107, as described below.

Referring still to Fig. 10, the work machine 100 includes a wing actuator 125 coupled at a first end to the wing frame 118 and at a second end to a base portion 107. The base portion 107 is supported by wing wheels 105. The force sensor for the base portion is configured to measure the downforce at the base portion 107 and to send the measured downforce to the controller 114. The wing actuator 125 is operably connected to the controller 144 and is moveable between an extended position and a retracted position to adjust the wing frame 118 at the direction of the controller 144. For example, when the wing actuator 125 is extended, the wing frame 118 rotates to move a rearward portion 127 of the wing frame 118 downward. When the actuator 125 is contracted, the wing frame 118 rotates to move the rearward portion 127 of the wing frame 118 upward. In other embodiments, the geometry of the machine may be different such that extension of the wing actuator 125 results in upward movement of the rearward portion 127 of the wing frame 118 and contraction of the wing actuator 125 results in downward movement of the rearward portion 127 of the wing frame 118.

Additionally, the downforce of the wing frame 118 may be adjusted by adjusting the pressure within the wing actuator 125. An increase in pressure within the wing actuator 125 causes the wing actuator 125 to extend, and a decrease in pressure within the wing actuator 125 causes the wing actuator to contract.

It should be appreciated that the rear end of the wing actuator 125 is above the axis of rotation of the wing frame 118, whereas the rear ends of the rotate frame actuators 122, 124 are below the axis of rotation of the rotate frame 110. Therefore, extension of the wing actuator 125 causes downward movement of the rearward-facing portion of the wing frame 118, and extension of the rotate frame actuators 122, 124 cause upward movement of the rearward portion of the rotate frame 110. With these arrangement-based differences in mind, the control methods described above with respect to the rotate frame 110 are also operable with respect to the wing frame 118. The control methods operable with respect to the wing frame 118 include, for example, control methods 150, 164, 178, 193, 206, 220 and other methods related thereto and described herein

Control method 150 is described with respect to the wing frame 118 as an example of how a control method described above may be applied to the wing frame 118. Referring to control method 150, the position of the wing frame 118 is adjusted based on the position of the wing row unit 117.

Similar to step 152 of control method 150, a desired wing-to-arm angle is selected. The wing-to-arm angle is an angle defined between a rearward or rearward-facing portion of the wing frame 118 and the wing arm 119. Similar to step 154, an actual wing-to-arm angle is determined by the sensor 140. In the illustrative embodiment, the sensor 140 sends a position signal to the controller 144. In the illustrative embodiment, the position signal is indicative of (or may be used to calculate) the actual wing-to-arm angle. Similar to step 156, the controller 144 determines whether the actual wing-to-arm angle is equal to the desired wing-to-arm angle. If the actual wing-to-arm angle is equal to or within an acceptable range of the desired wing-to-arm angle, then the controller 144 will repeat the steps similar to steps 154 and 156.

If the actual wing-to-arm angle is outside the acceptable range, the control method proceeds to a step similar to step 158. At steps similar to steps 158 and 160, if the actual wing-to-arm angle is greater than the desired wing-to-arm angle, then the controller 144 will send a signal to the wing actuator 125 instructing the actuator to contract from a first position to a second position. Contraction of the actuators 125 moves the rearward end 127 of the wing frame 118 upward. This, in turn, decreases the actual frame-to-arm angle. After the actuator 125 has contracted to the second position, the wing-to-arm angle is equal to or within an acceptable range of the desired wing-to-arm angle. Referring to steps similar to steps 158 and 162, if the actual wing-to-arm angle is less than the desired wing-to-arm angle, then the controller 144 will send a signal to the actuator 125 instructing the actuator to extend from a first position to a second position. Extensions of the actuator 125 moves the rearward-facing end 127 of the rotate frame 118 downward. This, in turn, increases the actual wing-to-arm angle. After the actuator 125 has extended to the second position, the wing-to-arm angle is equal to or within an acceptable range of the desired wing-to-arm angle.

Referring to FIG. 11, another exemplary embodiment of an agricultural machine, such as a row crop planter 1000 is shown. The machine 1000 includes a main frame 1102 supported above the ground by wheels 1104 and/or tracks 1105, which are capable of moving the machine forwardly in the axial direction as shown by the arrow 106. The main frame 1102 may support one or more commodity containers such as the container 1108. The main frame 1102 is coupled to a rotate frame 1110 that extends laterally from a first lateral end 1112 to a second lateral end 1114. It should be appreciated that many aspects of the machine 1000 are identical to the machine 100 described herein; where aspects of the two embodiments are substantially identical, often times, the same reference number will be used to represent the identical aspects. Additionally, it should be appreciated that each control method described above with respect to the machine 100 may be operable with respect to the machine 1000. The control methods applicable to the machine 100 include, for example, control methods 150, 164, 178, 193, 206, 220 and other methods related thereto and described herein.

The machine 1000 differs from the machine 100 in that the machine 1000 includes multiple groups of commonly-sized actuators configured to cooperatively adjust the rotate frame (or rock shaft) 1110. The multiple groups of commonly-sized actuators may be extended or contracted to adjust the position or downforce of the rotate frame 1110, as will be described in greater detail below. It should be appreciated that the rear ends of the rockshaft actuators are above the axis of rotation of the rockshaft 1110, whereas the rear ends of the actuators 122, 124 of rotate frame 110 are below the axis of rotation of the rotate frame 110. Therefore, extension of the rockshaft actuators cause downward movement of the rearward-facing portion of the rockshaft, and extension of the actuators 122, 124 of the rotate frame 110 cause upward movement of the rearward portion of the rotate frame 110. With these arrangement-based differences in mind, the control methods described above with respect to the rotate frame 110 are also operable with respect to the rotate frame 1110.

In the illustrative embodiment shown in Fig. 11, the rotate frame 1110 includes a center frame section 1116, a pair of outer frame sections 1118, 1120, and a pair of intermediate frame sections 1122, 1124 each disposed between the center frame section 1116 and one of the outer frame sections 1118, 1120. Each group of commonly-sized actuators is configured to adjust a different section of the rotate frame 1110. A group of commonly-sized actuators 1126 is configured to adjust the outer frame section 1118. In the illustrative embodiment, the group of commonly-sized actuators 1126 includes three actuators. A group of commonly-sized actuators 1128 is configured to adjust the outer frame section 1120. In the illustrative embodiment, the group of commonly-sized actuators 1128 includes three actuators. A group of commonly-sized actuators 1130 is configured to adjust the center frame section 1116. In the illustrative embodiment, the group of commonly-sized actuators 1130 includes two actuators. A group of commonly-sized actuators 1132 is configured to adjust the intermediate frame section 1122. In the illustrative embodiment, the group of commonly-sized actuators 1132 includes one actuator. A group of commonly-sized actuators 1134 is configured to adjust the intermediate frame section 1124. In the illustrative embodiment, the group of commonly-sized actuators 1134 includes one actuator.

Control method 150 is described with respect to the machine 1000 as an example of how a control method described above may be applied to the machine 1000. Fig. 4 illustrates a control method 150 used to adjust the rotate frame 1110, wherein the position of the rotate frame 1110 is adjusted based on the position of the row units 116. According to the method 150, at step 152, a desired frame-to-arm angle is selected. A user may input a desired frame-to-arm angle into the operator control system, or the desired frame-to-arm angle may be predetermined (and pre-set) based on the type of machine and application in use. At step 154, the actual frame-arm-angle 142 is determined by the sensor 140 described above. In the illustrative embodiment, the sensor 140 sends a position signal to the controller 144. In the illustrative embodiment, the position signal is indicative of (or may be used to calculate) the actual frame-to-arm angle 142. At step 156, the controller 144 determines whether the actual frame-to-arm angle 142 is equal to the desired frame-to-arm angle. If the actual frame-to-arm angle 142 is equal to or within an acceptable range of the desired frame-to-arm angle, then the controller 144 will repeat steps 154 and 156.

Referring again to step 156, if the actual frame-to-arm angle 142 is outside the acceptable range, the control method proceeds to step 158. At steps 158 and 160, if the actual frame-to-arm angle 142 is greater than the desired frame-to-arm angle, then the controller 144 will send a signal or signals to the multiple groups of actuators 1126, 1128, 1130, 1132, 1134 instructing the actuators to contract from respective first positions to second positions. Contraction of the actuators 1126, 1128, 1130, 1132, 1134 moves a rearward end 1129 of the rotate frame 110 upward. This, in turn, decreases the actual frame-to-arm angle 142. After the actuators 122, 124 have contracted to the respective second positions, the frame-to-arm angle 142 is equal to or within an acceptable range of the desired frame-to-arm angle. Referring to steps 158 and 162, if the actual frame-to-arm angle 142 is less than the desired frame-to-arm angle, then the controller 144 will send a signal or signals to the actuators 1126, 1128, 1130, 1132, 1134 instructing the actuators to extend from respective first positions to second positions. Extension of the actuators 1126, 1128, 1130, 1132, 1134 moves the rearward end 1129 of the rotate frame 110 downward. This, in turn, increases the actual frame-to-arm angle 142. After the actuators 1126, 1128, 1130, 1132, 1134 have extended to the respective second positions, the frame-to-arm angle 142 is equal to or within an acceptable range of the desired frame-to-arm angle.

In some cases, the controller 144 sends different signals to each group (or to some of the groups) of commonly-sized actuators 1126, 1128, 1130, 1132, 1134. Thus, each group of commonly-sized actuators is instructed to move simultaneously, albeit with different amounts of movement for different groups of actuators, such that the entire lateral length of the rearward portion 1129 of the rotate frame 1110 is adjusted. In this instance, the actuators 1126 and 1128 receive a first signal with instructions to extend and contract the same amount as one another, as the actuators 1126 and 1128 are all commonly-sized. The actuators 1132 and 1134 receive a second signal with instructions to extend and contract the same amount as one another, as the actuators 1126 and 1128 are all commonly-sized. The actuators 1132 and 1134 are differently sized than the actuators 1126 and 1128. Additionally, the actuators 1130 receive a third signal with instructions to extend and contract the same amount as one another, as the actuators 1130 are all commonly-sized. The actuators 1130 are differently sized than the actuators 1132 and 1134 and the actuators 1126 and 1128.

In some cases, the controller 144 may send different signals to selected groups of one of more commonly-sized actuators, and send no signal to other groups of commonly-sized actuators. Thus, only selected groups of commonly-sized actuators will adjust the positions or downforces of their respective lateral sections of the rotate frame 1110. Depending on the signal(s) received from the controller 144, the different groups of commonly-sized actuators may adjust their respective section of the rotate frame 1110 by the same amount or by different amounts. This is because the topography and soil composition may differ over the lateral length of the machine 1000 such that different operating positions or downforces may be required for different lateral section of the rotate frame 1110 and for the row units 116 attached thereto.

While operation of the machine 1000 has only been described with respect to the control method 150, it should be appreciated that each of the additional control methods described herein are also applicable to the machine 1000. Where extension and pressure increases are discussed with respect to the rotate frame actuators of the machine 100, contraction and pressure decreases shall be substituted in when applying the control methods to the machine 1000.

## Claims

1. A method for an agricultural machine (100; 1000) including a main frame (102; 1102) configured to be supported above a soil level when in use, a rotate frame (110; 1110) coupled to the main frame and configured to pivot, about an axis (126), towards or away from the soil level when in use, a row unit (116) coupled to the rotate frame, one or more actuators (122, 124, 1126, 1128, 1130, 1132, 1134) configured to pivot the rotate frame (110; 1110) about the axis (126), and a sensor (140), the method comprising:
(a) selecting (152) a desired frame-to-arm angle (142) defined between a rearward portion (128) of the rotate frame and an arm (132, 134) extending between the rearward portion of the rotate frame and the row unit;
(b) determining (154) an actual frame-to-arm angle (142) defined between the rearward portion of the rotate frame and the arm based on a position of the arm relative to the rotate frame identified by the sensor (140);
(c) adjusting, by one or more actuators (122; 124), the actual frame-to-arm angle toward the desired frame-to-arm angle, wherein adjusting the actual frame-to-arm angle includes pivoting (160, 162) the rotate frame relative to the main frame of the agricultural machine;
(d) selecting (194) a desired row unit downforce to be exerted by the row unit on the soil;
(e) determining (196) the actual row unit downforce that is exerted by the row unit on the soil; and
(f) adjusting (202, 204), by a row unit actuator (148), the actual row unit downforce toward the desired row unit downforce;
**characterised in that** steps (e) and (f) collectively are completed at a faster rate than are steps (b) and (c) collectively.

2. The method of claim 1, wherein pivoting the rotate frame relative to a main frame includes:
rotating the rearward end of the rotate frame upward (160) when the actual frame-to-arm angle is greater than the desired frame-to-arm angle; and
rotating the rearward end of the rotate frame downward (162) when the actual frame-to-arm angle is less than the desired frame-to-arm angle.

3. The method of any one of the preceding claims, wherein adjusting the actual frame-to-arm angle toward the desired frame-to-arm angle includes:
sending a first signal to a first group of one or more actuators (122, 124; 1130) coupled to the rotate frame and the main frame; and
moving (160, 162) the first group of one or more actuators from a first position to a second position based on the first signal,
wherein in the first position the actual frame-to-arm angle is not equal to or within an acceptable range of the desired frame-to-arm angle, and in the second position the actual frame-to-arm angle is equal to or within an acceptable range of the desired frame-to-arm angle.

4. The method of claim 3, wherein adjusting the actual frame-to-arm angle toward the desired frame-to-arm angle further includes:
sending a second signal to a second group of one or more actuators (1132, 1134) coupled to the rotate frame and the main frame; and
moving (160, 162) the second group of one or more actuators from a third position to a fourth position based on the second signal;
wherein in the third position the actual frame-to-arm angle is not equal to or within an acceptable range of the desired frame-to-arm angle, and in the fourth position the actual frame-to-arm angle is equal to or within an acceptable range of the desired frame-to-arm angle.

5. The method of claim 4, wherein adjusting the actual frame-to-arm angle toward the desired frame-to-arm angle further includes:
sending a third signal to a third group of one or more actuators (1126, 1128) coupled to the rotate frame and the main frame; and
moving (160, 162) the third group of one or more actuators from a fifth position to a sixth position based on the third signal;
wherein in the fifth position the actual frame-to-arm angle is not equal to or within an acceptable range of the desired frame-to-arm angle, and in the sixth position the actual frame-to-arm angle is equal to or within an acceptable range of the desired frame-to-arm angle.

6. The method of any one of the preceding claims, wherein moving the rotate frame relative to the main frame of the agricultural machine includes:
rotating the rotate frame from a first position to a second position,
wherein in the first position the actual frame-to-arm angle is not equal to or within an acceptable range of the desired frame-to-arm angle, and in the second position the actual frame-to-arm angle is equal to the desired frame-to-arm angle.

7. The method of claim 6, wherein the agricultural machine further includes a wing frame (118, 120) coupled to a lateral end (1112, 1114) of the rotate frame, and the method further comprises:
adjusting the wing frame to be substantially aligned with the rotate frame in response to the rotate frame rotating to the second position.

8. The method of any one of the preceding claims, wherein the agricultural machine further includes a wing frame (118, 120) coupled to a lateral end (1112, 1114) of the rotate frame and a wing row unit (117) coupled to the wing frame, and the method further comprises:
selecting a desired wing-to-arm angle defined between a rearward portion (127) of the wing frame and a wing arm (119) extending between the rearward portion of the wing frame and the wing row unit;
determining an actual wing-to-arm angle defined between the rearward portion of the wing frame and the wing arm; and
adjusting the actual wing-to-arm angle toward the desired wing-to-arm angle, wherein adjusting the actual wing-to-arm angle includes moving the wing frame relative to the main frame of the agricultural machine.

9. An agricultural machine (100; 1000) comprising:
a main frame (102; 1102) configured to be supported above a soil level when in use;
a rotate frame (110; 1110) coupled to the main frame (102; 1102) and configured to pivot, about an axis (126), towards or away from the soil level when in use;
a row unit (116) coupled to the rotate frame and configured to deliver commodity to the soil;
a linkage assembly (130) including an arm (132, 134) having a first end (136) pivotably coupled to the rotate frame and a second end (138) pivotably coupled to the row unit;
one or more actuators (122, 124, 1126, 1128, 1130, 1132, 1134) configured to pivot the rotate frame (110; 1110) about the axis (126), the one or more actuators having a first end coupled to the main frame and a second end coupled to the rotate frame;
a sensor (140) configured to identify a position of the arm relative to the rotate frame, wherein the position is indicative of a frame-to-arm angle (142) defined between a rearward portion (128) of the rotate frame (110; 1110) and the arm (132, 134);
a downforce gauge (146) configured to identify an actual row unit downforce;
a row unit actuator (148) configured to adjust the downforce exerted by the row unit (116) on the soil; and
a controller (144) configured to cause the one or more actuators (122, 124, 1126, 1128, 1130, 1132, 1134) to pivot the rotate frame relative to the main frame based on the identified position of the arm (132, 134) relative to the rotate frame (110; 1110) and a desired frame-to-arm angle (142);
wherein the row unit (116) comprises the downforce gauge (146) and the row unit actuator (148);
wherein the controller (144) is further configured to cause the row unit actuator (148) to adjust the actual row unit downforce toward a desired row unit downforce; and
**characterised in that**
the agricultural machine is configured to identify an actual row unit downforce and adjust the actual row unit downforce toward the desired row unit downforce at a faster rate than it is to identify an actual frame-to-arm angle and adjust the actual frame-to-arm angle toward the desired frame-to-arm angle.

10. The agricultural machine of claim 9, further comprising:
a first group of one or more commonly-sized actuators (1130) each having a first end coupled to the main frame and a second end coupled to the rotate frame; and
a second group of one or more commonly-sized actuators (1132, 1134) each having a first end coupled to the main frame and a second end coupled to the rotate frame;
wherein the controller is configured to send a first signal to each actuator of first group of one or more commonly-sized actuators instructing the actuators to pivot the rotate frame from a first position to a second position;
wherein the controller is configured to send a second signal to each actuator of the second group of one or more commonly-sized actuators instructing the actuators pivot the rotate frame from the first position to the second position; and
wherein the second group of one or more commonly-sized actuators have a different size than the first group of one or more actuators.

11. The agricultural machine of claim 9 or claim 10, further comprising:
a wing frame (118, 120) coupled to a lateral end (1112, 1114) of the rotate frame;
a wing row unit (117) coupled to the wing frame and configured to deliver commodity to the soil; and
a wing linkage assembly including a wing arm (119) having a first end pivotably coupled to the wing frame and a second end pivotably coupled to the wing row unit;
wherein the controller is configured to send a signal instructing the wing frame to move relative to the main frame based on the position of the wing arm relative to the wing frame.

12. The agricultural machine of claim 9 or claim 10, further comprising:
a wing frame coupled to a lateral end (1112, 1114) of the rotate frame;
a wing row unit (117) coupled to the wing frame and configured to deliver commodity to the soil; and
a wing linkage assembly including a wing arm (119) having a first end pivotably coupled to the wing frame and a second end pivotably coupled to the wing row unit;
wherein the controller is configured to send a signal instructing the wing frame to move relative to the main frame based on the position of the rotate frame.

## Patentansprüche

1. Verfahren für eine Landmaschine (100; 1000) mit einem Hauptrahmen (102; 1102), der dafür ausgelegt ist, im Gebrauch über einem Bodenniveau getragen zu werden, einem Drehrahmen (110; 1110), der mit dem Hauptrahmen gekoppelt ist und dafür ausgelegt ist, im Gebrauch um eine Achse (126) hin zu oder weg von dem Bodenniveau zu schwenken, einer Reiheneinheit (116), die mit dem Drehrahmen gekoppelt ist, einem oder mehreren Stellantrieben (122, 124, 1126, 1128, 1130, 1132, 1134), die für das Schwenken des Drehrahmens (110; 1110) um die Achse (126) ausgelegt ist, und einem Sensor (140), wobei das Verfahren Folgendes beinhaltet:
(a) Auswählen (152) eines gewünschten Rahmen-Arm-Winkels (142), der zwischen einem rückwärtigen Teil (128) des Drehrahmens und einem Arm (132, 134), der sich zwischen dem rückwärtigen Teil des Drehrahmens und der Reiheneinheit erstreckt, definiert ist;
(b) Bestimmen (154) eines tatsächlichen Rahmen-Arm-Winkels (142), der zwischen dem rückwärtigen Teil des Drehrahmens und dem Arm definiert ist, auf Basis einer durch den Sensor (140) ermittelten Stellung des Arms relativ zu dem Drehrahmen; und
(c) Einstellen, durch einen oder mehrere Stellantriebe (122, 124), des tatsächlichen Rahmen-Arm-Winkels hin zum gewünschten Rahmen-Arm-Winkel, wobei das Einstellen des tatsächlichen Rahmen-Arm-Winkels das Schwenken (160, 162) des Drehrahmens relativ zu dem Hauptrahmen der Landmaschine aufweist;
(d) Auswählen (194) eines durch die Reiheneinheit auf den Boden auszuübenden gewünschten Reiheneinheitsanpressdrucks;
(e) Bestimmen (196) des tatsächlichen Reiheneinheitsanpressdrucks, der durch die Reiheneinheit auf den Boden ausgeübt wird; und
(f) Einstellen (202, 204), durch einen Stellantrieb der Reiheneinheit (148), des tatsächlichen Reiheneinheitsanpressdrucks hin zum gewünschten Reiheneinheitsanpressdruck;
**dadurch gekennzeichnet, dass**
die Schritte (e) und (f) zusammen schneller ausgeführt werden als die Schritte (b) und (c) zusammen.

2. Verfahren nach Anspruch 1, wobei das Schwenken des Drehrahmens relativ zu einem Hauptrahmen Folgendes umfasst:
Drehen des rückwärtigen Endes des Drehrahmens nach oben (160), wenn der tatsächliche Rahmen-Arm-Winkel größer als der gewünschte Rahmen-Arm-Winkel ist; und
Drehen des rückwärtigen Endes des Drehrahmens nach unten (162), wenn der tatsächliche Rahmen-Arm-Winkel kleiner als der gewünschte Rahmen-Arm-Winkel ist.

3. Verfahren nach einem der vorhergehenden Ansprüche, wobei das Einstellen des tatsächlichen Rahmen-Arm-Winkels hin zum gewünschten Rahmen-Arm-Winkel Folgendes umfasst:
Senden eines ersten Signals an eine erste Gruppe von einem oder mehreren Stellantrieben (122, 124; 1130), die mit dem Drehrahmen und dem Hauptrahmen gekoppelt sind; und
Bewegen (160, 162) der ersten Gruppe von einem oder mehreren Stellantrieben von einer ersten Stellung in eine zweite Stellung auf Basis des ersten Signals,
wobei der tatsächliche Rahmen-Arm-Winkel in der ersten Stellung nicht gleich dem oder innerhalb eines akzeptablen Bereichs des gewünschten Rahmen-Arm-Winkel(s) ist und in der zweiten Stellung des tatsächlichen Rahmen-Arm-Winkels gleich dem oder innerhalb eines akzeptablen Bereichs des gewünschten Rahmen-Arm-Winkel(s) ist.

4. Verfahren nach Anspruch 3, wobei das Einstellen des tatsächlichen Rahmen-Arm-Winkels hin zum gewünschten Rahmen-Arm-Winkel ferner Folgendes umfasst:
Senden eines zweiten Signals an eine zweite Gruppe von einem oder mehreren Stellantrieben (1132, 1134), die mit dem Drehrahmen und dem Hauptrahmen gekoppelt sind; und
Bewegen (160, 162) der zweiten Gruppe von einem oder mehreren Stellantrieben von einer dritten Stellung in eine vierte Stellung auf Basis des zweiten Signals;
wobei der tatsächliche Rahmen-Arm-Winkel in der dritten Stellung nicht gleich dem oder innerhalb eines akzeptablen Bereichs des gewünschten Rahmen-Arm-Winkel(s) ist und in der vierten Stellung des tatsächlichen Rahmen-Arm-Winkels gleich dem oder innerhalb eines akzeptablen Bereichs des gewünschten Rahmen-Arm-Winkel(s) ist.

5. Verfahren nach Anspruch 4, wobei das Einstellen des tatsächlichen Rahmen-Arm-Winkels hin zum gewünschten Rahmen-Arm-Winkel ferner Folgendes umfasst:
Senden eines dritten Signals an eine dritte Gruppe von einem oder mehreren Stellantrieben (1126, 1128), die mit dem Drehrahmen und dem Hauptrahmen gekoppelt sind; und
Bewegen (160, 162) der dritten Gruppe von einem oder mehreren Stellantrieben von einer fünften Stellung in eine sechste Stellung auf Basis des dritten Signals;
wobei der tatsächliche Rahmen-Arm-Winkel in der fünften Stellung nicht gleich dem oder innerhalb eines akzeptablen Bereichs des gewünschten Rahmen-Arm-Winkel(s) ist und in der sechsten Stellung des tatsächlichen Rahmen-Arm-Winkels gleich dem oder innerhalb eines akzeptablen Bereichs des gewünschten Rahmen-Arm-Winkel(s) ist.

6. Verfahren nach einem der vorhergehenden Ansprüche, wobei das Bewegen des Drehrahmens relativ zum Hauptrahmen der Landmaschine Folgendes umfasst:
Drehen des Drehrahmens von einer ersten Stellung in eine zweite Stellung,
wobei der tatsächliche Rahmen-Arm-Winkel in der ersten Stellung nicht gleich dem oder innerhalb eines akzeptablen Bereichs des gewünschten Rahmen-Arm-Winkel(s) ist und in der zweiten Stellung des tatsächlichen Rahmen-Arm-Winkels gleich dem gewünschten Rahmen-Arm-Winkel ist.

7. Verfahren nach Anspruch 6, wobei die Landmaschine ferner einen Flügelrahmen (118, 120) umfasst, der mit einem seitlichen Ende (1112, 1114) des Drehrahmens gekoppelt ist, und das Verfahren ferner Folgendes beinhaltet:
Einstellen des Flügelrahmens, so dass er im Wesentlichen auf den Drehrahmen ausgerichtet ist, als Reaktion auf das Drehen des Drehrahmens in die zweite Stellung.

8. Verfahren nach einem der vorhergehenden Ansprüche, wobei die Landmaschine ferner einen Flügelrahmen (118, 120), der mit einem seitlichen Ende (1112, 1114) des Drehrahmens gekoppelt ist, und eine Flügel-Reiheneinheit (117), die mit dem Flügelrahmen gekoppelt ist, umfasst und das Verfahren ferner Folgendes beinhaltet:
Auswählen eines gewünschten Flügel-Arm-Winkels, der zwischen einem rückwärtigen Teil (127) des Flügelrahmens und einem Flügelarm (119), der sich zwischen dem rückwärtigen Teil des Flügelrahmens und der Flügel-Reiheneinheit erstreckt, definiert ist;
Bestimmen eines tatsächlichen Flügel-Arm-Winkels, der zwischen dem rückwärtigen Teil des Flügelrahmens und dem Flügelarm definiert ist; und
Einstellen des tatsächlichen Flügel-Arm-Winkels hin zum gewünschten Flügel-Arm-Winkel, wobei das Einstellen des tatsächlichen Flügel-Arm-Winkels das Bewegen des Flügelrahmens relativ zum Hauptrahmen der Landmaschine umfasst.

9. Landmaschine (100, 1000), die Folgendes beinhaltet:
einen Hauptrahmen (102; 1102), der dafür ausgelegt ist, im Gebrauch über einem Bodenniveau getragen zu werden;
einen Drehrahmen (110; 1110), der mit dem Hauptrahmen (102; 1102) gekoppelt ist und dafür ausgelegt ist, im Gebrauch um eine Achse (126) hin zu oder weg von dem Bodenniveau zu schwenken;
eine Reiheneinheit (116), die mit dem Drehrahmen gekoppelt ist und für das Abgeben eines Guts an den Boden ausgelegt ist;
eine Verbindungsgliedanordnung (130), die einen Arm (132, 134) mit einem schwenkbar mit dem Drehrahmen gekoppelten ersten Ende (136) und einem schwenkbar mit der Reiheneinheit gekoppelten zweiten Ende (138) umfasst;
einen oder mehrere Stellantriebe (122, 124, 1126, 1128, 1130, 1132, 1134), die für das Schwenken des Drehrahmens (110; 1110) um die Achse (126) ausgelegt sind, wobei der eine oder die mehreren Stellantriebe ein erstes Ende, das mit dem Hauptrahmen gekoppelt ist, und ein zweites Ende, das mit dem Drehrahmen gekoppelt ist, aufweisen;
einen Sensor (140), der für das Ermitteln einer Stellung des Arms relativ zum Drehrahmen ausgelegt ist, wobei die Stellung für einen Rahmen-Arm-Winkel (142) bezeichnend ist, der zwischen einem rückwärtigen Teil (128) des Drehrahmens (110; 1110) und dem Arm (132, 134) definiert ist;
einen Anpressdruckmesser (146), der für das Ermitteln eines tatsächlichen Reiheneinheit-Anpressdrucks ausgelegt ist;
einen Reiheneinheitsstellantrieb (148), der für das Einstellen des durch die Reiheneinheit (116) auf den Boden ausgeübten Anpressdrucks ausgelegt ist; und
eine Steuerung (144), die dafür ausgelegt ist, den einen oder die mehreren Stellantriebe (122, 124, 1126, 1128, 1130, 1132, 1134) zum Schwenken des Drehrahmens relativ zum Hauptrahmen auf Basis der ermittelten Stellung des Arms (132, 134) relativ zum Drehrahmen (110; 1110) und einem gewünschten Rahmen-Arm-Winkel (142) zu veranlassen;
wobei die Reiheneinheit (116) den Anpressdruckmesser (146) und den Reiheneinheitsstellantrieb (148) beinhaltet;
wobei die Steuerung (144) ferner dafür ausgelegt ist, den Reiheneinheitsstellantrieb (148) zum Einstellen des tatsächlichen Reiheneinheit-Anpressdrucks hin zu einem gewünschten Reiheneinheit-Anpressdruck zu veranlassen; und
**dadurch gekennzeichnet, dass**
die Landmaschine dafür ausgelegt ist, einen tatsächlichen Reiheneinheit-Anpressdruck zu ermitteln und den tatsächlichen Reiheneinheit-Anpressdruck hin zu dem gewünschten Reiheneinheit-Anpressdruck schneller einzustellen, als die Ermittlung eines tatsächlichen Rahmen-Arm-Winkels und das Einstellen des tatsächlichen Rahmen-Arm-Winkels hin zu dem gewünschten Rahmen-Arm-Winkel dauern.

10. Landmaschine nach Anspruch 9, die ferner Folgendes beinhaltet:
eine erste Gruppe von einem oder mehreren gängig dimensionierten Stellantrieben (1130), die jeweils ein mit dem Hauptrahmen gekoppeltes erstes Ende und ein mit dem Drehrahmen gekoppeltes zweites Ende aufweisen; und
eine zweite Gruppe von einem oder mehreren gängig dimensionierten Stellantrieben (1132, 1134), die jeweils ein mit dem Hauptrahmen gekoppeltes erstes Ende und ein mit dem Drehrahmen gekoppeltes zweites Ende aufweisen;
wobei die Steuerung für das Senden eines ersten Signals an jeden Stellantrieb der ersten Gruppe von einem oder mehreren gängig dimensionierten Stellantrieben ausgelegt ist, das die Stellantriebe zum Schwenken des Drehrahmens von einer ersten Stellung in eine zweite Stellung anweist;
wobei die Steuerung für das Senden eines zweiten Signals an jeden Stellantrieb der zweiten Gruppe von einem oder mehreren gängig dimensionierten Stellantrieben ausgelegt ist, das die Stellantriebe zum Schwenken des Drehrahmens von der ersten Stellung in die zweite Stellung anweist; und
wobei der eine oder die mehreren gängig dimensionierten Stellantriebe der zweiten Gruppe eine andere Größe als der eine oder die mehreren Stellantriebe der ersten Gruppe aufweisen.

11. Landmaschine nach Anspruch 9 oder Anspruch 10, die ferner Folgendes beinhaltet:
einen Flügelrahmen (118, 120), der mit einem seitlichen Ende (1112, 1114) des Drehrahmens gekoppelt ist,
eine Flügel-Reiheneinheit (117), die mit dem Flügelrahmen gekoppelt ist und für das Abgeben eines Guts an den Boden ausgelegt ist;
eine Verbindungsgliedanordnung, die einen Flügelarm (119) mit einem schwenkbar mit dem Flügelrahmen gekoppelten ersten Ende und einem schwenkbar mit der Flügel-Reiheneinheit gekoppelten zweiten Ende umfasst;
wobei die Steuerung für das Senden eines Signals ausgelegt ist, das den Flügelrahmen zum Bewegen relativ zum Hauptrahmen auf Basis der Stellung des Flügelarms relativ zum Flügelrahmen anweist.

12. Landmaschine nach Anspruch 9 oder Anspruch 10, die ferner Folgendes beinhaltet:
einen Flügelrahmen, der mit einem seitlichen Ende (1112, 1114) des Drehrahmens gekoppelt ist;
eine Flügel-Reiheneinheit (117), die mit dem Flügelrahmen gekoppelt ist und für das Abgeben eines Guts an den Boden ausgelegt ist; und
eine Flügel-Verbindungsgliedanordnung, die einen Flügelarm (119) mit einem schwenkbar mit dem Flügelrahmen gekoppelten ersten Ende und einem schwenkbar mit der Flügel-Reiheneinheit gekoppelten zweiten Ende umfasst;
wobei die Steuerung für das Senden eines Signals ausgelegt ist, das den Flügelrahmen zum Bewegen relativ zum Hauptrahmen auf Basis der Stellung des Drehrahmens anweist.

## Revendications

1. Procédé pour machine agricole (100 ; 1000) comportant un cadre principal (102 ; 1102) configuré pour être supporté au-dessus d'un niveau de sol en cours d'utilisation, un cadre rotatif (110 ; 1110) couplé au cadre principal et configuré pour pivoter, autour d'un axe (126), vers le niveau du sol ou loin de celui-ci en cours d'utilisation, une unité de rang (116) couplée au cadre rotatif, un ou plusieurs actionneurs (122, 124, 1126, 1128, 1130, 1132, 1134) configurés pour faire pivoter le cadre rotatif (110 ; 1110) autour de l'axe (126), et un capteur (140), le procédé comprenant :
(a) la sélection (152) d'un angle de cadre à bras souhaité (142) défini entre une partie arrière (128) du cadre rotatif et un bras (132, 134) s'étendant entre la partie arrière du cadre rotatif et l'unité de rangée ;
(b) la détermination (154) un angle de cadre à bras réel (142) défini entre la partie arrière du cadre rotatif et le bras en fonction d'une position du bras par rapport au cadre rotatif identifiée par le capteur (140) ;
(c) l'ajustement, par un ou plusieurs actionneurs (122 ; 124), de l'angle de cadre à bras réel vers l'angle de cadre à bras souhaité, dans lequel l'ajustement de l'angle de cadre à bras réel comporte le pivotement (160, 162) du cadre rotatif par rapport au cadre principal de la machine agricole ;
(d) la sélection (194) d'une force descendante d'unité de rangée souhaitée destinée à être exercée par l'unité de rangée sur le sol ;
(e) la détermination (196) de la force descendante d'unité de rangée réelle exercée par l'unité de rangée sur le sol ; et
(f) l'ajustement (202, 204), par un actionneur d'unité de rangée (148), de la force descendante d'unité de rangée réelle vers la force descendante d'unité de rangée souhaitée ;
**caractérisé en ce que**
les étapes (e) et (f) collectivement sont achevées plus rapidement que les étapes (b) et (c) collectivement.

2. Procédé selon la revendication 1, dans lequel le pivotement du cadre rotatif par rapport à un cadre principal comporte :
la rotation de l'extrémité arrière du cadre rotatif vers le haut (160) lorsque l'angle de cadre à bras réel est supérieur à l'angle de cadre à bras souhaité ; et
la rotation de l'extrémité arrière du cadre rotatif vers le bas (162) lorsque l'angle de cadre à bras réel est inférieur à l'angle de cadre à bras souhaité.

3. Procédé selon l'une quelconque des revendications précédentes, dans lequel l'ajustement de l'angle de cadre à bras réel vers l'angle de cadre à bras souhaité comporte :
l'envoi d'un premier signal à un premier groupe d'un ou plusieurs actionneurs (122, 124 ; 1130) couplés au cadre rotatif et au cadre principal ; et
le déplacement (160, 162) du premier groupe d'un ou plusieurs actionneurs d'une première position à une deuxième position en fonction du premier signal,
dans lequel dans la première position, l'angle de cadre à bras réel n'est pas égal à l'angle de cadre à bras réel souhaité, ni dans une plage acceptable de celui-ci, et dans la deuxième position, l'angle de cadre à bras réel est égal à l'angle de cadre à bras souhaité ou dans une plage acceptable de celui-ci.

4. Procédé selon la revendication 3, dans lequel l'ajustement de l'angle de cadre à bras réel vers l'angle de cadre à bras souhaité comporte en outre :
l'envoi d'un deuxième signal à un deuxième groupe d'un ou plusieurs actionneurs (1132, 1134) couplés au cadre rotatif et au cadre principal ; et
le déplacement (160, 162) du deuxième groupe d'un ou plusieurs actionneurs d'une troisième position à une quatrième position en fonction du deuxième signal ;
dans la troisième position, l'angle de cadre à bras réel n'est pas égal à l'angle de cadre à bras souhaité, ni dans une plage acceptable de celui-ci, et dans la quatrième position, l'angle de cadre à bras réel est égal à l'angle de cadre à bras souhaité ou dans une plage acceptable de celui-ci.

5. Procédé selon la revendication 4, dans lequel l'ajustement de l'angle de cadre à bras réel vers l'angle de cadre à bras souhaité comporte en outre :
l'envoi d'un troisième signal à un troisième groupe d'un ou plusieurs actionneurs (1126, 1128) couplés au cadre rotatif et au cadre principal ; et
le déplacement (160, 162) du troisième groupe d'un ou plusieurs actionneurs d'une cinquième position à une sixième position en fonction du troisième signal ;
dans lequel dans la cinquième position, l'angle de cadre à bras réel n'est pas égal à l'angle de cadre à bras souhaité, ni dans une plage acceptable de celui-ci, et dans la sixième position, l'angle de cadre à bras réel est égal de l'angle de cadre à bras souhaité, ou dans une plage acceptable de celui-ci.

6. Procédé selon l'une quelconque des revendications précédentes, dans lequel le déplacement du cadre rotatif par rapport au cadre principal de la machine agricole comporte :
la rotation du cadre rotatif d'une première position à une seconde position,
dans la première position, l'angle de cadre à bras réel n'est pas égal à l'angle de cadre à bras souhaité, ni dans une plage acceptable de celui-ci, et dans la seconde position, l'angle de cadre à bras réel est égal à l'angle de cadre à bras réel souhaité.

7. Procédé selon la revendication 6, dans lequel la machine agricole comporte en outre un cadre d'aile (118, 120) couplé à une extrémité latérale (1112, 1114) du cadre rotatif, et le procédé comprend en outre :
l'ajustement du cadre d'aile pour qu'il soit substantiellement aligné avec le cadre rotatif en réponse à la rotation du cadre rotatif jusqu'à la seconde position.

8. Procédé selon l'une quelconque des revendications précédentes, dans lequel la machine agricole comporte en outre un cadre d'aile (118, 120) couplé à une extrémité latérale (1112, 1114) du cadre rotatif et une unité de rangée d'aile (117) couplée au cadre d'aile, et le procédé comprend en outre :
la sélection d'un angle d'aile à bras souhaité défini entre une partie arrière (127) du cadre d'aile et un bras d'aile (119) s'étendant entre la partie arrière du cadre d'aile et l'unité de rangée d'aile ;
la détermination d'un angle d'aile à bras réel défini entre la partie arrière du cadre d'aile et le bras d'aile ; et
l'ajustement de angle d'aile à bras réel vers l'angle d'aile à bras souhaité, dans lequel l'ajustement de l'angle d'aile à bras réel comporte le déplacement du cadre d'aile par rapport au cadre principal de la machine agricole.

9. Machine agricole (100 ; 1000) comprenant :
un cadre principal (102 ; 1102) configuré pour être soutenu au-dessus d'un niveau de sol en cours d'utilisation ;
un cadre rotatif (110 ; 1110) couplé au cadre principal (102 ; 1102) et configuré pour pivoter, autour d'un axe (126), vers le niveau du sol ou loin de celui-ci en cours d'utilisation ;
une unité de rangée (116) couplée au cadre rotatif et configurée pour distribuer un produit agricole sur le sol ;
un ensemble de liaison (130) comportant un bras (132, 134) présentant une première extrémité (136) couplée de manière pivotante au cadre rotatif et une seconde extrémité (138) couplée de manière pivotante à l'unité de rangée ;
un ou plusieurs actionneurs (122, 124, 1126, 1128, 1130, 1132, 1134) configurés pour faire pivoter le cadre rotatif (110 ; 1110) autour de l'axe (126), les un ou plusieurs actionneurs ayant une première extrémité couplée au cadre principal et une seconde extrémité couplée au cadre rotatif ;
un capteur (140) configuré pour identifier une position du bras par rapport au cadre rotatif, dans lequel la position est indicative d'un angle de cadre à bras (142) défini entre une partie arrière (128) du cadre rotatif (110 ; 1110) et le bras (132, 134) ;
une jauge de force descendante (146) configuré pour identifier une force descendante d'unité de rangée réelle ;
un actionneur d'unité de rangée (148) configuré pour ajuster la force descendante exercée par l'unité de rangée (116) sur le sol ; et
un contrôleur (144) configuré pour amener les un ou plusieurs actionneurs (122, 124, 1126, 1128, 1130, 1132, 1134) à faire pivoter le cadre rotatif par rapport au cadre principal en fonction de la position identifiée du bras (132, 134) par rapport au cadre rotatif (110 ; 1110) et d'un angle de cadre à bras souhaité (142) ;
dans lequel l'unité de rangée (116) comprend la jauge de force descendante (146) et l'actionneur d'unité de rangée (148) ;
dans lequel le contrôleur (144) est configuré en outre pour amener l'actionneur d'unité de rangée (148) à ajuster la force descendante d'unité de rangée réelle vers une force descendante d'unité de rangée souhaitée ; et
**caractérisée en ce que**
la machine agricole est configurée pour identifier une force descendante d'unité de rangée réelle et ajuster la force descendante d'unité de rangée réelle vers la force descendante d'unité de rangée souhaitée plus rapidement qu'elle identifie un angle de cadre à bras réel et ajuste l'angle de cadre à bras réel vers l'angle de cadre à bras souhaité.

10. Machine agricole selon la revendication 9, comprenant en outre :
un premier groupe d'un ou plusieurs actionneurs de taille courante (1130), présentant chacun une première extrémité couplée au cadre principal et une seconde extrémité couplée au cadre rotatif ; et
un second groupe d'un ou plusieurs actionneurs de taille courante (1132, 1134), présentant chacun une première extrémité couplée au cadre principal et une seconde extrémité couplée au cadre rotatif ;
dans lequel le contrôleur est configuré pour envoyer un premier signal à chaque actionneur du premier groupe d'un ou plusieurs actionneurs de taille courante, ordonnant aux actionneurs de faire pivoter le cadre rotatif d'une première position à une seconde position ;
dans lequel le contrôleur est configuré pour envoyer un second signal à chaque actionneur du second groupe d'un ou plusieurs actionneurs de taille courante, ordonnant aux actionneurs de faire pivoter le cadre rotatif de la première position à la seconde position ; et
dans lequel les un ou plusieurs actionneurs de taille courante du second groupe ont une taille différente des un ou plusieurs actionneurs du premier groupe.

11. Machine agricole selon la revendication 9 ou 10, comprenant en outre :
un cadre d'aile (118, 120) couplé à une extrémité latérale (1112, 1114) du cadre rotatif ;
une unité de rangée d'aile (117) couplée au cadre d'aile et configurée pour distribuer un produit sur le sol ; et
un ensemble de liaison d'aile comportant un bras d'aile (119) présentant une première extrémité couplée de manière pivotante au cadre d'aile et une seconde extrémité couplée de manière pivotante à l'unité de rangée d'aile ;
dans lequel le contrôleur est configuré pour envoyer un signal ordonnant au cadre d'aile de se déplacer par rapport au cadre principal en fonction de la position du bras d'aile par rapport au cadre d'aile.

12. Machine agricole selon la revendication 9 ou 10, comprenant en outre :
un cadre d'aile couplé à une extrémité latérale (1112, 1114) du cadre rotatif ;
une unité de rangée d'aile (117) couplée au cadre d'aile et configurée pour distribuer un produit agricole sur le sol ; et
un ensemble de liaison d'aile comportant un bras d'aile (119) présentant une première extrémité couplée de manière pivotante au cadre d'aile et une seconde extrémité couplée de manière pivotante à l'unité de rangée d'aile ;
dans lequel le contrôleur est configuré pour envoyer un signal ordonnant au cadre d'aile de se déplacer par rapport au cadre principal en fonction de la position du cadre rotatif.
